# EUROPÄISCHE PATENTANMELDUNG

(11) **EP 1 517 209 A1**
(43) Veröffentlichungstag der Anmeldung: **23.03.2005**
(21) Anmeldenummer: 04012168.3
(22) Anmeldetag: 22.05.2004
(51) Int. Cl.: G05D 1/00

(54) **Vorrichtung und Verfahren zum Fernbedienen eines Fahrzeuges von einem Mutterfahrzeug aus**

(30) Priorität: 16.09.2003 CH 15722003
(71) Anmelder: OERLIKON CONTRAVES AG, 8050 Zürich (CH)
(72) Erfinder: Bühler, Bruno, 8174 Stadel bei Niederglatt (CH); Thöni, Urban, Dr., 8308 Illnau (CH)
(74) Vertreter: OK pat AG

(57) **Zusammenfassung**

Vorrichtung (10) mit einem ersten Fahrzeug (11) und einem zweiten Fahrzeug (13), die über eine Kommunikationsverbindung (12) miteinander verbunden sind. Das erste Fahrzeug (11) hat Bedieneinheiten (21), die beim Fahren in herkömmlicher Weise betätigt werden. Im ersten Fahrzeug (11) gibt es Verbindungen (23) zum Übertragen von Fahrzeuginformation (24), die mit der Betätigung der Bedieneinheiten (21) korreliert ist. Schaltmittel (28) dienen dazu, das erste Fahrzeug (11) von einem Fahrmodus in einen Fernbedienungsmodus umzuschalten. Ein Sender (27) dient zum Umsetzen der Fahrzeuginformation (24) in Signale und zum Übertragen der Signale von dem ersten (11) an das zweite Fahrzeug (13). Das zweite Fahrzeug (13) umfasst einen Empfänger (31) zum Empfangen der Signale und zum Umsetzen in Steuerinformation. Ausserdem sind Steuerelemente (32) vorgesehen, welche von dem ersten Fahrzeug (11) aus durch Betätigung der Bedieneinheiten (21) ansteuerbar sind, nachdem die Schaltmittel (28) in den Fernbedienungsmodus gebracht wurden.

## Beschreibung

Die vorliegende Erfindung betrifft eine Vorrichtung und ein Verfahren zum Fernbedienen eines Fahrzeugs von einem Mutterfahrzeug aus.

Es wird die Priorität des Schweizer Patentgesuches CH 01572/03 vom 16. September 2004 beansprucht.

Insbesondere betrifft die Erfindung Fahrzeuge, die durch Umschaltung dazu eingesetzt werden können, ein anderes Fahrzeug fernzusteuern bzw. fernzubedienen.

Typischerweise werden fernsteuerbare Fahrzeuge von einer Art Konsole aus bedient. Zu diesem Zweck ist die Konsole mit verschiedenen Bedienelementen, wie zum Beispiel einem Joy-Stick und Schaltern, versehen. Von der Konsole aus werden die entsprechenden Kommandos über einen Funkkanal oder dergleichen an das fernzusteuernde Fahrzeug übermittelt. Je nach Art des fernzusteuernden Fahrzeugs werden spezielle Kommandostände eingesetzt, um die für das Fernbedienen notwendigen Bedienelemente und Mittel bereit zu stellen. Diese Kommandostände können aufwendig und kostspielig sein. Vor allem aber müssen sie jeweils an den Ort transportiert werden, an dem das fernzusteuernde Fahrzeug zum Einsatz kommen soll.

Es gibt zum Beispiel Roboterfahrzeuge, die in speziellen Situationen zum Einsatz kommen. Ein Beispiel ist ein Roboter zum Entschärfen vom Bomben oder ein Roboter, der dazu ausgelegt ist kritische Chemikalien zu handhaben. Solche Roboter werden an den Einsatzort transportiert, und der Kommandostand wird abgeladen und aufgebaut. Erst dann ist ein Einsatz des Roboterfahrzeugs möglich.

Es ist eine Aufgabe der vorliegenden Erfindung, derartige Vorrichtungen zu verbessern und den Einsatz von fernsteuerbaren Fahrzeugen zu vereinfachen.

Gemäss Erfindung wird eine Vorrichtung bereit gestellt, die ein erstes Fahrzeug und ein zweites Fahrzeug umfasst, wobei beiden Fahrzeuge über eine Kommunikationsverbindung miteinander verbunden sind. Das erste Fahrzeug hat Bedieneinheiten, die beim Fahren in herkömmlicher Art und Weise betätigt werden. Im ersten Fahrzeug gibt es Verbindungen zum Übertragen von Fahrzeuginformation, die mit der Betätigung der Bedieneinheiten korreliert ist. Es sind gemäss Erfindung Schaltmittel vorhanden, um das erste Fahrzeug von einem Fahrmodus in einen Fernbedienungsmodus umschalten zu können. Ausserdem ist ein Sender vorgesehen zum Umsetzen der Fahrzeuginformation in Signale und zum Übertragen der Signale von dem ersten Fahrzeug an das zweite Fahrzeug. Das zweite Fahrzeug umfasst einen Empfänger zum Empfangen der Signale und zum Umsetzen in Steuerinformation. Ausserdem sind Steuerelemente vorgesehen, wobei die Steuerelemente des zweiten Fahrzeugs von dem ersten Fahrzeug aus durch Betätigung der Bedieneinheiten ansteuerbar sind, nachdem die Schaltmittel in den Fernbedienungsmodus gebracht wurden.

Weitere vorteilhafte Ausführungsformen sind den abhängigen Ansprüchen zu entnehmen.

Ein Verfahren gemäss Erfindung ist dem Anspruch 10 zu entnehmen und ein weiteres vorteilhaftes Verfahren ist in dem abhängigen Verfahrensanspruch 11 beansprucht.

Einzelheiten und Vorteile der Erfindung werden im Folgenden anhand von Ausführungsbeispielen und mit Bezug auf die Zeichnung ausführlich beschrieben.

Es zeigen:
- Fig. 1: eine Vorrichtung mit zwei Fahrzeugen in einer schematisierten Darstellung;
- Fig. 2: Details einer Vorrichtung gemäss Erfindung in einer schematisierten Blockdarstellung;
- Fig. 3: Details einer weiteren Vorrichtung gemäss Erfindung in einer schematisierten Blockdarstellung;
- Fig. 4: Details einer weiteren Vorrichtung gemäss Erfindung in einer schematisierten Blockdarstellung;
- Fig. 5: eine weitere Vorrichtung mit zwei Fahrzeugen gemäss Erfindung in einer schematisierten Darstellung;
- Fig. 6: eine weitere Vorrichtung mit einem ersten Fahrzeug und einem virtuellen Fahrzeug gemäss Erfindung in einer schematisierten Darstellung.

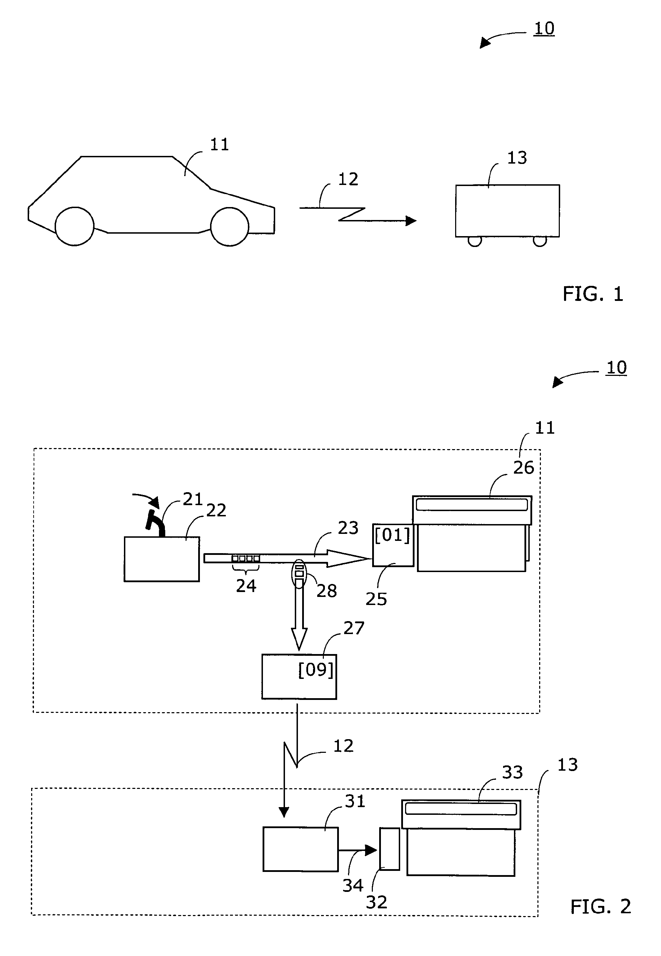

Eine erste erfindungsgemässe Vorrichtung 10 wird im Zusammenhang mit den Figuren 1 und 2 beschrieben. Die Vorrichtung 10 umfasst ein erstes Fahrzeug 11, ein zweites Fahrzeug 13 und eine Kommunikationsverbindung 12 zum Übertragen von Signalen von dem ersten Fahrzeug 11 an das zweite Fahrzeug 13. Bei dem ersten Fahrzeug 11 kann es sich um ein konventionelles Fahrzeug, zum Beispiel einen Personenkraftwagen, ein Nutzlastfahrzeug, zum Beispiel einen Lastkraftwagen, ein Sonderfahrzeug, zum Beispiel einen Panzer, oder dergleichen handeln. Das erste Fahrzeug 11 wird hierin auch als Mutterfahrzeug bezeichnet.

Als zweites Fahrzeug 13 kann unter anderem ein fernsteuerbares Roboterfahrzeug, ein Testfahrzeug, ein Prototypen-Fahrzeug, ein simuliertes Fahrzeug, ein emuliertes Fahrzeug, oder dergleichen dienen. Das zweite Fahrzeug 13 wird hierin auch als fernbedienbares bzw. fernsteuerbares Fahrzeug bezeichnet.

Als Kommunikationsverbindung 12 kann eine Funk- oder eine optische Verbindung eingesetzt werden. Die Verbindung kann direkt (Punkt zu Punkt) oder indirekt (zum Beispiel Broadcast) sein. Es ist aber auch möglich, eine Kabeloder Fiberverbindung einzusetzen, wobei dadurch der maximale Einsatzradius, d.h. der Abstand zwischen dem Mutterfahrzeug und dem fernbedienbaren Fahrzeug limitiert ist. Die Kommunikationsverbindung 12 kann standardisiert sein. Besonders geeignet sind Kommunikationsverbindungen 12, die auf einem standardisierten Kommunikationsprotokoll, wie zum Beispiel dem Bluetooth-Standard, beruhen. Es ist auch vorteilhaft, eine Kommunikationsverbindung 12 einzusetzen, die mit einem Controller Area Network (CAN) kompatibel ist, oder die dem CAN Standard entspricht.

Der Informationsfluss über die Kommunikationsverbindung 12 kann verschlüsselt sein, um ein Abhören oder eine externe Beeinflussung zu verhindern.

Um die Sicherheit zu erhöhen, kann die Informationsübertragung redundant ausgelegt sein.

Neben zahlreichen fahrzeugüblichen Komponenten, wie einer Antriebseinheit 26 (Motor), einer Steuerung 25 (zum Beispiel Motorsteuerung und Einspritzung), einem Fahrwerk, einer Karosserie und einer Fahrgastzelle, umfasst das erste Fahrzeug 11 Bedieneinheiten 21, die beim Fahren des Fahrzeugs 11 betätigt werden. Hierbei kann es sich zum Beispiel um eine oder mehrere der folgenden Bedieneinheiten handeln:
- ein Lenkrad,
- ein Gaspedal 21,
- ein Bremspedal,
- ein Kupplungspedal,
- Gangschaltung,
- Schalter (wie zum Beispiel Lichtschalter), usw.

Modernere Fahrzeuge weisen einen Fahrzeugbus 23 zum Übertragen von Fahrzeuginformation 24 auf, die mit der Betätigung der Bedieneinheiten 21 korreliert ist. Bei dem Fahrzeugbus 23 kann es sich zum Beispiel um eine CAN Bus oder um einen Bus handeln, der mit dem CAN kompatibel ist. Bei sogenannten Drive-by-wire Fahrzeugen ist mindestens ein Teil der Bedieneinheiten nicht mehr direkt mechanisch oder indirekt hydraulisch mit den zu bewegenden oder zu beeinflussenden Komponenten (Lenkung, Einspritzung, Bremsen, usw.) verbunden, sondern es gibt lediglich eine "elektronische" Verbindung über einen Fahrzeugbus 23.

Ein Drive-by-wire Fahrzeug umfasst zum Beispiel Wandler (zum Beispiel Sensoren, Potentiometer, Weggeber, etc.) und Steuerelemente (zum Beispiel Aktuatoren), die über den redundanten Fahrzeugbus 23 miteinander verknüpft sind. Die bisher üblichen hydraulischen und mechanischen Verbindungen im Fahrzeug sind ersetzt durch elektronische Verbindungen 23 und durch Steuerelemente (zum Beispiel einer Steuerung 25, Stellmotoren und Schaltelemente). Es kann ein fehlertolerantes Rechnersystem vorgesehen sein, das gewisse Vorgänge steuert und zum Beispiel in Notsituationen eingreift. Die Rechner des Rechnersystems wiederum erhalten ihre Daten zum einen vom Fahrer, der seine Befehle mittels der Bedieneinheiten an das System übergibt, zum anderen von zahlreichen Sensoren, die den jeweiligen Zustand des Fahrzeugs erfassen. Ein Drive-by-wire System kann zum Beispiel für das Lenken, Beschleunigen und Bremsen, Schalten und Kuppeln eines Fahrzeugs eingesetzt werden. Der Fahrer löst durch die Betätigung von Bedienelementen und die damit verbundenen Wandler Signale aus, die über den Datenbus im Form von Fahrzeuginformation 24 an die Steuerelemente als ausführende Organe (zum Beispiel elektrische Aktuatoren oder eine Steuerung 25) übertragen werden. Dies gilt auch für die Lenkung, wo sogar eine Rückmeldung über die Lenkkräfte an den Fahrer erfolgen kann.

Das Bremspedal kann zum Beispiel mit einem pedalbetätigten Wandler ausgestattet sein, der je nach Betätigung Fahrzeuginformation über den Fahrzeugbus 23 an das Bremssystem des Fahrzeugs übermittelt. Das Bremssystem wird hier als Steuerelement bezeichnet. Im Bremssystem wird die Fahrzeuginformation empfangen und umgesetzt, um dann einen entsprechenden Hydraulikdruck aufzubauen und das Fahrzeug zu bremsen. Das Gaspedal 21 kann mit einem als Wandler 22 dienenden Potentiometer ausgestattet sein, das die Betätigung in Fahrzeuginformation 24 umwandelt, die über den Fahrzeugbus 23 einem Steuergerät 25 als Steuerelement zugeführt wird. Das Steuergerät 25 spritzt dann eine der Gaspedalstellung entsprechende Kraftstoffmenge in die Zylinder des Motors 26. Zu diesem Zweck kann zum Beispiel über einen Stellmotor die Stellung der Drosselklappe eines Ottomotors 26 beeinflusst werden. Statt einem Potentiometer kann auch ein Drucksensor oder ein Wegaufnehmer als Wandler 22 eingesetzt werden.

Das Lenkrad des Fahrzeugs kann mit einem Positionsgeber (zum Beispiel einem Winkelgeber) verbunden sein, der je nach Lenkeinschlag verschiedene Fahrzeuginformation über den Fahrzeugbus 23 an ein Lenksystem als Steuerelement übermittelt.

Das Fahrzeug 11, dessen erfindungswesentliche Details in Fig. 2 schematisch dargestellt sind, verfügt über einen zentralen Fahrzeugbus 23, über den alle wesentliche Fahrzeuginformation für das Funktionieren der Drive-by-wire Funktionen übertragen werden. Die verschiedenen Steuerelemente als "Empfänger" der übertragenen Fahrzeuginformation können angesprochen werden, indem zum Beispiel ein in Netzwerken übliches Adressierungsschema eingesetzt wird. Dies wird im Folgenden anhand des Zusammenwirkens des Gaspedals 21 und der Steuerung 25 beschrieben. Betätigt man in einem solchen Drive-by-wire Fahrzeug 11 zum Beispiel das Gaspedal 21, so wird durch den Wandler 22 die mechanische Betätigung in elektrische Signale umgesetzt. Die elektrischen Signale werden umgewandelt in digitale Daten, die hier als Fahrzeuginformation 24 bezeichnet werden. Die Fahrzeuginformation 24 repräsentiert die momentane Stellung des Gaspedals 21. Der Einfachheit halber sind die digitalen Daten als Pakete gezeigt. Jedes der Pakete, oder eine Reihe von solchen Paketen, kann einen Header oder Identifier besitzen, um anzugeben, welches der Steuerelemente der Empfänger der Daten ist. Somit ist gewährleistet, dass nur der gewünschte Empfänger die Daten empfängt und verarbeitet. Der Steuerung 26 wurde zum Beispiel die "Adresse" [01] zugeteilt, wie in Fig. 2 angedeutet. Das Bremssystem kann zum Beispiel die Adresse [02] und die Lenkung die Adresse [03] haben.

Es ist offensichtlich, dass es neben der als Beispiel erwähnten Adressierung auch andere Möglichkeiten der Zuweisung von Daten gibt. Es ist zum Beispiel möglich, von einem Protokoll Gebrauch zu machen, das Zeitschlitze (time-slots) verwendet, die jeweils Fahrzeuginformation für eines der Steuerelemente enthält.

Gemäss Erfindung umfasst das Fahrzeug 11 sogenannte Schaltmittel 28, um von einem Fahrmodus in einen Fernbedienungsmodus umschalten zu können. Die Schaltmittel 28 sind in Fig. 2 nur schematisch angedeutet, da es verschiedene Möglichkeiten der Realisierung gibt. Die Schaltmittel 28 können in Form von Hardware, Software, oder als Kombination von Hard- und Software realisiert werden. Folgende Möglichkeiten der Umschaltung sind bei einem Drive-by-wire Fahrzeug 11 denkbar, wobei es sich lediglich um Beispiele handelt:
- Es kann durch eine zentrale Einheit (zum Beispiel einen Rechner), der mit dem Fahrzeugbus 23 in Verbindung steht, eine Umschaltung oder Umleitung aller relevanten Fahrzeuginformation auf einen Sender 27 erfolgen, der auch mit dem Bus 23 in Verbindung steht. Dies kann zum Beispiel dadurch geschehen, dass der Rechner der umzuleitenden Fahrzeuginformation eine neue Adresse (zum Beispiel [09] in Fig. 2) zuteilt und somit alle Fahrzeuginformation nur noch von dem Sender 27 empfangen und verarbeitet wird.
- Es kann der Zündschlüssel-Schalter oder ein anderer Schalter des Fahrzeugs 11 in eine bestimmte Stellung gebracht werden, in der nur der Sender 27, aber nicht die anderen Steuerelemente (wie zum Beispiel die Steuerung 25) als Empfänger aktiv sind. In diesem Fall wird zum Beispiel Fahrzeuginformation 24 an die Steuerung 25 gesendet, kann dort aber nicht empfangen werden. Der Sender 27 kann so ausgelegt sein, dass er einen vorgegebenen Adressbereich (zum Beispiel Fahrzeuginformation [01] bis [03]) zu empfangen in der Lage ist.
- Es kann eine mechanische oder elektronische Unterbrechung gewisser Busverbindungen vorgenommen werden, wobei jedoch eine Verbindung zum Sender 27 aufrecht erhalten bleibt, oder hergestellt wird.
- Es kann ein Zeitschlitzverfahren für die Kommunikation auf dem Bus 23 verwendet werden. Gewisse Zeitschlitze können dann der Fernbedienungsfunktion zugeteilt sein. Information, die in diesem Zeitschlitzen übertragen wird, kann dann über an den Sender und von dort zum zweiten Fahrzeug übertragen werden.
- Es können elektro-optische Umschalter eingesetzt werden.
- Es ist auch möglich, die Umschaltfunktion mittels einer Frequenzumschaltung zu realisieren.

Der Sender 27 dient zum Umsetzen der Fahrzeuginformation 24 in entsprechende Signale und zum Übertragen der Signale über die Kommunikationsverbindung 12 an einen Empfänger 31, der sich im oder am fernbedienbaren Fahrzeug 13 befindet. Der Empfänger 31 dient zum Empfangen der Signale und zum Umsetzen in sogenannte Steuerinformation. Das fernbedienbare Fahrzeug 13 umfasst auch Steuerelemente, wie zum Beispiel einen Motor 33 als Antriebsmittel mit einer Steuerung 32. Die Umsetzung der Signale erfolgt so, dass eine Bedienbarkeit des fernbedienbaren Fahrzeugs 13 von dem Mutterfahrzeug 11 aus möglich ist. Dabei können Umrechnungs- oder Umwandlungsregeln angewendet werden, die berücksichtigen, dass zum Beispiel das Mutterfahrzeug 11 einen Ottomotor 26 und das fernbedienbare Fahrzeug 13 einen Elektromotor 33 als Antriebsmittel aufweisen. Es können bei der Umsetzung auch vorgegebene Kennlinien oder dergleichen zur Anwendung kommen. Die Umsetzung kann im Mutterfahrzeug und/oder im fernbedienbaren Fahrzeug erfolgen.

Zwischen dem Empfänger 31 und den Steuerelementen des Fahrzeugs 13 gibt es eine Verbindung 34. Hierbei kann es sich um diskret ausgeführte Verbindungen handeln, die jeweils nur zwischen einem Steuerelement und dem Empfänger 31 angeordnet sind, oder es kann auch hier ein Bus zur Anwendung kommen.

Die Fahrzeuge 11 und 13 sind so gebaut, dass das Fahrzeug 13 von dem Mutterfahrzeug 11 aus durch Betätigung der Bedieneinheiten 21 fernbedienbar ist, nachdem die Schaltmittel 28 in den Fernbedienungsmodus gebracht wurden. Befinden sich die Schaltmittel 28 im Fahrmodus, so kann das Mutterfahrzeug 11 normal gefahren werden. Vorzugsweise steht das Mutterfahrzeug, während über die Bedieneinheiten 21 das Fahrzeug 13 fernbedient wird.

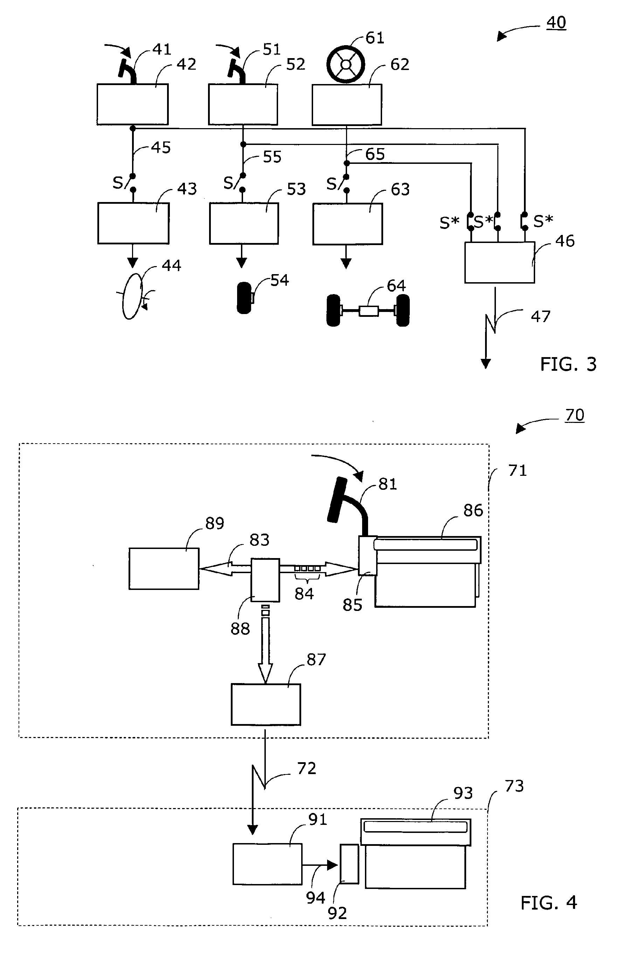

Ein weiteres Drive-by-wire Mutterfahrzeug 40, gemäss Erfindung, ist in Fig. 3 schematisch dargestellt. Das Fahrzeug 40 umfasst im gezeigten Beispiel ein Throttle-by-wire, ein Brake-by-wire und ein Steer-by-wire System.

Das Throttle-by-wire System umfasst ein Gaspedal 41, das mit einem Wandler 42 in Verbindung steht. Bei dem Wandler 42 kann es sich zum Beispiel um ein Potentiometer handeln. Der Wandler 42 ist über eine individuelle Leitung 45 mit einem Steuerelement 43 verbunden. Bei dem Steuerelement 43 handelt es sich zum Beispiel um einen Stellmotor, der die Stellung einer Drosselklappe 44 eines Ottomotors beeinflusst.

Das Brake-by-wire System umfasst ein Bremspedal 51, das mit einem Wandler 52 in Verbindung steht. Bei dem Wandler 52 kann es sich zum Beispiel um einen Drucksensor handeln. Der Wandler 52 ist über eine individuelle Leitung 55 mit einem Steuerelement 53 verbunden. Bei dem Steuerelement 53 handelt es sich zum Beispiel um ein Hydraulikbremssystem 54, das auf eine Bremsscheibe eines Rades einwirkt.

Das Steer-by-wire System umfasst ein Lenkrad 61, das mit einem Wandler 62 in Verbindung steht. Bei dem Wandler 62 kann es sich zum Beispiel um einen Drehgeber handeln. Der Wandler 62 ist über eine individuelle Leitung 65 mit einem Steuerelement 63 verbunden. Bei dem Steuerelement 63 handelt es sich zum Beispiel um ein hydraulisches Lenksystem 64, das auf die Räder und/oder eine Vorderachse einwirkt.

Die erfindungsgemässe Umschaltfunktion wird im gezeigten Beispiel wie folgt realisiert: Es sind mehrere Schalter vorgesehen, die es erlauben die Fahrzeuginformation, die von den Wandlern 42, 52, 62 an die Steuerelemente 43, 53, 63 gesendet werden, an einen Sender 46 umzuleiten. Zu diesem Zweck wird an Schalter S ein Signal gesendet, das die Schalter öffnet, wenn eine Umschaltung in den Fernbedienungsmodus gewünscht ist. Schalter S*, die am Eingang des Senders 46 liegen, werden in diesem Fall geschlossen. Im Fahrbetrieb hingegen sind die Schalter S* offen und die Schalter S geschlossen.

Der Sender 46 überträgt Signale über die Kommunikationsverbindung 47 an ein fernsteuerbares Fahrzeug.

Eine weitere Ausführungsform der Erfindung ist in Fig. 4 gezeigt. Die Vorrichtung 70 umfasst ein erstes Fahrzeug bzw. Mutterfahrzeug 71, ein zweites bzw. fernsteuerbares Fahrzeug 73 und eine Kommunikationsverbindung 72 zum Übertragen von Signalen von dem Mutterfahrzeug 71 an das fernsteuerbare Fahrzeug 73. Es handelt sich beim Mutterfahrzeug 71 nicht um ein Drive-by-wire Fahrzeug, sondern um ein konventionelles Fahrzeug. Die Verbindung zwischen dem Gaspedal-Bedienelement 81 und der Einspritzung 85 eines Dieselmotors 86 ist mechanischer Natur. Es ist in dem Fahrzeug 71 jedoch ein Fahrzeugbus 83 vorhanden, der gewisse Fahrzeugfunktionen steuert. Über den Fahrzeugbus 83 kann zum Beispiel Fahrzeuginformation 84 von der Einspritzung 85 an einen zentralen Rechner 89 (zum Beispiel einer Motormanagement-Einheit) übergeben werden.

Gemäss Erfindung umfasst das Fahrzeug 71 Schaltmittel 88, um von einem Fahrmodus in einen Fernbedienungsmodus umschalten zu können. Die Schaltmittel 88 leiten Fahrzeuginformation 84 an einen Sender 87 zum Umsetzen der Fahrzeuginformation 84 in Signale und zum Übertragen der Signale über eine Kommunikationsverbindung 72 an das fernsteuerbare Fahrzeug 73. Im unteren Teil der Fig. 4 ist beispielhaft gezeigt, dass das fernsteuerbare Fahrzeug 73 einen Empfänger 91 aufweist, der die Signale empfängt und umsetzt in Steuersignale, die an Steuerelemente übergeben werden. Als Beispiel ist eine Antriebseinheit 93 gezeigt, die eine Einspritzung 92 aufweist. Die Einspritzung 92 empfängt elektrische Signale über eine Verbindung 94.

Bei der Umschaltung vom Fahrbetrieb auf den Fernsteuerbetrieb wird der normale Betrieb des Mutterfahrzeugs 71 unterbrochen. Dies kann zum Beispiel dadurch erfolgen, dass die Einspritzung 85 deaktiviert wird.

Die vorliegende Erfindung ist besonders dazu geeignet in Drive-by-wire Fahrzeugen eingesetzt zu werden, bei denen die heute übliche mechanische und hydraulische Verbindung zwischen Lenkrad und Pedalen zu Lenkung, Antrieb und Bremse teilweise oder ganz durch eine elektronische Steuerung ersetzt wurde. Eine entsprechende Ausführungsform der Erfindung wurde unter Bezugnahme auf die Figuren 1, 2 und 3 beschrieben.

Vorhandene Fahrzeuge können durch den Ein- oder Anbau eines Senders und der Schaltmittel zum Fernbedienen des zweiten Fahrzeugs umgerüstet werden.

In einer ersten Ausführungsform kann das fernsteuerbare Fahrzeug nur im Sichtbereich der Person betrieben werden, die im Mutterfahrzeug sitzt und die Bedienelemente betätigt.

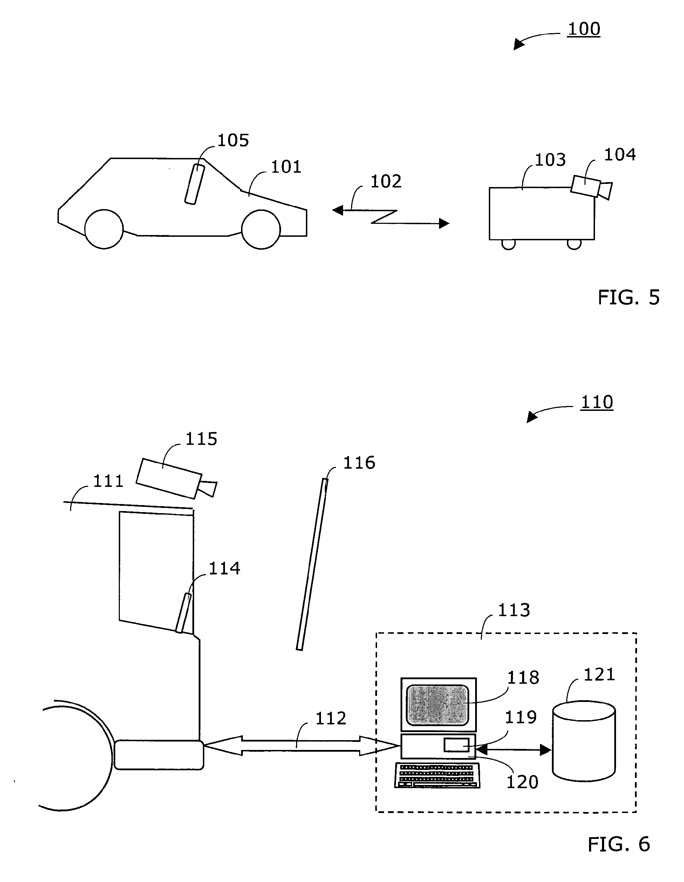

In einer zweiten Ausführungsform kann der Einsatzbereich erweitert werden, indem das fernbedienbare Fahrzeug mit einer Kamera, einem Infrarot-Sensor, einem Ultraschallwandler oder einem Radar ausgestattet ist, um nur einige Beispiele zu nennen. Ein Beispiel einer entsprechenden Vorrichtung 100 ist in Fig. 5 gezeigt. Das fernbedienbare Fahrzeug 103 ist mit einer Kamera 104 ausgestattet. Die Kamera 104 kann über eine Kommunikationsverbindung 102, oder über eine andere Verbindung, Bildinformation an das Mutterfahrzeug 101 liefern, die dort auf einem Bildschirm 105 dargestellt wird. Die Kommunikationsverbindung 102 ist in dem gezeigten Beispiel bi-direktional ausgelegt.

Das fernbedienbare Fahrzeug kann auch mit Greifarmen, Aktuatoren, Sensoren, und anderen Auf- und Anbauten versehen sein. Um diese Auf- und Anbauten fernbedienen zu können, können entweder vorhandene Bedienelemente des Mutterfahrzeugs quasi zweckentfremdet eingesetzt werden, oder es können spezielle Schalter, Taster, Potentiometer und dergleichen in das Mutterfahrzeug eingebaut werden.

Es kann alternativ oder zusätzlich eine separate Kamera eingesetzt werden, die nicht am fernbedienbaren Fahrzeug befestigt ist.

Vorzugsweise wird ein Mutterfahrzeug so ausgelegt, dass es das fernbedienbare Fahrzeug transportieren und bei Bedarf aussetzen kann. Man kann mit dem Mutterfahrzeug das fernbedienbare Fahrzeug an einen Einsatzort bringen und dort aussetzen. Zu diesem Zweck wird das Mutterfahrzeug vom Fahrbetrieb in den Fernsteuerbetrieb umgeschaltet. Durch Betätigen der Bedienelemente des Mutterfahrzeugs wird das fernbedienbare Fahrzeug dann ferngesteuert.

Besonders geeignet ist die Erfindung zum Fernsteuern eines Roboterfahrzeugs. Ein Roboterfahrzeug kann in gefährlichen Bereichen, zum Beispiel zum Entschärfen von Bomben, oder zum Handhaben von chemischen oder biologischen Stoffen, eingesetzt werden.

Gemäss einer weiteren Ausführungsform der Erfindung kommt ein virtuelles zweites Fahrzeug zum Einsatz. Eine entsprechende Vorrichtung 110 ist in Fig. 6 in Form eines Blockdiagrams gezeigt. Die Vorrichtung 110 umfasst ein Mutterfahrzeug 111, zum Beispiel ein Nutzlastfahrzeug, mit Bedienelementen 114. Intern sind Verbindungen zum Übertragen von Fahrzeuginformation vorgesehen. Es werden Schaltmittel und ein Sender an diese Verbindungen angekoppelt, oder mit diesen Verbindungen verknüpft, um Fahrzeuginformation an den Sender übergeben zu können, falls die Schaltmittel in einen Fernbedienungsmodus gebracht werden. Diese Verbindungen, die Schaltmittel und der Sender sind in Fig. 6 nicht sichtbar. Details hierzu können den als Beispiel gedachten Figuren 1 bis 5 entnommen werden.

Falls sich die Schaltmittel im Fernbedienungsmodus befinden, sendet der Sender Fahrzeuginformation, oder Signale, die mit der Fahrzeuginformation korreliert sind, über eine Kommunikationsverbindung 112 an das virtuelle Fahrzeug 113. Bei der Kommunikationsverbindung 112 kann es sich zum Beispiel um einen Bus handeln. Das virtuelle Fahrzeug 113 umfasst einen Computer 119, der in dem gezeigten Beispiel mit einem optionalen Bildschirm 118 und einer optionalen Tastatur 120 ausgestattet ist. In dem Computer 119 ist ein Empfänger eingebaut, der zum Beispiel als Steckkarte ausgeführt sein kann und als Schnittstelle zwischen der Kommunikationsverbindung 112 und dem Sender des Mutterfahrzeugs 111 dient. Zusätzlich ist ein optionales Speichermedium 121 vorgesehen, dass Programme und/oder Daten zur Verfügung stellt. Der Computer 119 ist in der Lage, gewisse Dinge (zum Beispiel Landschaften oder Daten) visuell darzustellen. Der Computer 119 kann zum Beispiel über die Kommunikationsverbindung 112 mit einem Projektor 115 verbunden sein, der Bildinformation auf einer Leinwand 116 vor dem Nutzlastfahrzeug 111 abbildet.

Dem Computer 119 wird ein Programm zur Verfügung gestellt, das in der Lage ist, zumindest gewisse Abläufe oder Vorgänge zu emulieren, die beim Bedienen eines Fahrzeugs oder eines Teils eines Fahrzeugs auftreten können. Es ist zum Beispiel denkbar, dass das Programm eine virtuelle Darstellung einer neuartigen Lenkung für ein Nutzlastfahrzeug repräsentiert. Bevor Prototypen einer solchen Lenkung gebaut werden, kann mittels der Vorrichtung 110 eine Art Simulation durchgeführt werden. Dazu werden die Schaltmittel des Mutterfahrzeugs 111 in den Fernbedienungsmodus gebracht. Dann betätigt der Fahrer das Lenkrad 114. Über die Kommunikationsverbindung 112 wird Information an das virtuelle Fahrzeug 113 übermittelt, welche die Betätigung des Lenkrads 114 repräsentiert. Der Rechner 119 empfängt diese Information und setzt sie mittels Hardware und/oder mittels des Programms in Eingangsgrössen um, die dann in die Emulation einfliessen. Die Emulation ist eine softwaremässige Darstellung eines Steuerelements des virtuellen Fahrzeugs 113. Im vorliegenden Beispiel emuliert das Programm zum Beispiel das Verhalten der neuartigen Lenkung. Das Ergebnis der Emulation wird zum Beispiel als Bildinformation auf der Leinwand 116 dargestellt.

Eine solche Vorrichtung ermöglicht es, vorhandene Fahrzeuge weiterzuentwickeln, ohne grössere Eingriffe in diese Fahrzeuge selbst vornehmen zu müssen.

Eine ähnliche Ausführungsform kann auch dazu eingesetzt werden, um ein Mutterfahrzeug 111 in einer simulierten Umgebung zu testen, oder um Fahrer in einem Simulator trainieren zu können.

## Patentansprüche

1. Vorrichtung (10; 70; 100; 110) mit einem ersten Fahrzeug (11; 40; 71; 101; 111), einem zweiten Fahrzeug (13; 73; 103; 113), und einer Kommunikationsverbindung (12; 47; 72; 102; 112), wobei das erste Fahrzeug (11; 40; 71; 101; 111) umfasst:
- Bedieneinheiten (21; 41, 51, 61; 81; 114), die beim Fahren des ersten Fahrzeugs (11; 40; 71; 101; 111) betätigtbar sind,
- Verbindungen (23; 45, 55, 65; 83) zum Übertragen von Fahrzeuginformation (24; 84), die mit der Betätigung der Bedieneinheiten (21; 41, 51, 61; 81; 114) korreliert ist,
- Schaltmittel (28; S, S*; 88), um das erste Fahrzeug (11; 40; 71; 101; 111) von einem Fahrmodus in einen Fernbedienungsmodus umschalten zu können,
- Sender (27; 46; 87) zum Umsetzen der Fahrzeuginformation (24; 84) in Signale und zum Übertragen der Signale von dem ersten Fahrzeug (11; 40; 71; 101; 111) an das zweite Fahrzeug (13; 73; 103; 113),
wobei das zweite Fahrzeug (13; 73; 103; 113) umfasst:
- Empfänger (31; 91) zum Empfangen der Signale und zum Umsetzen in Steuerinformation,
- Steuerelemente (32; 92),
wobei die Steuerelemente (32; 92) des zweiten Fahrzeugs (13; 73; 103; 113) von dem ersten Fahrzeug (11; 40; 71; 101; 111) aus durch Betätigung der Bedieneinheiten (21; 41, 51, 61; 81; 114) ansteuerbar sind, nachdem die Schaltmittel (28; S, S*; 88) in den Fernbedienungsmodus gebracht wurden.

2. Vorrichtung (10; 100; 110) nach Anspruch 1,
wobei es sich bei dem ersten Fahrzeug (11; 40; 101; 111) um ein drive-by-wire Fahrzeug handelt und die Fahrzeuginformation (24) vorzugsweise Fahrbefehle repräsentiert.

3. Vorrichtung (10; 70; 100; 110) nach Anspruch 1 oder 2,
wobei das erste Fahrzeug (11; 40; 101; 111) Steuerelemente (25; 43, 53, 63) umfasst.

4. Vorrichtung (10; 100; 110) nach Anspruch 3,
wobei die Schaltmittel (28) zumindest teilweise als Software realisiert sind, welche die Umschaltung zwischen Steuerelementen (25; 43, 53, 63; 114) des ersten Fahrzeugs (11; 40; 71; 101; 111) auf Steuerelemente (32; 92) des zweiten Fahrzeugs (13; 73; 103; 113) hervorruft.

5. Vorrichtung (10; 100; 110) nach Anspruch 4,
wobei die Software eine Adressierung des Senders (27; 46) oder der Steuerelemente (25; 43, 53, 63; 114) des ersten Fahrzeugs (11; 40; 101; 111) über die Verbindungen (23; 45, 55, 65) ermöglicht.

6. Vorrichtung (10; 70; 100; 110) nach einem der Ansprüche 1, 2 oder 3,
wobei eine Umsetzung im ersten Fahrzeug (11; 40; 71; 101; 111) und/oder im zweiten Fahrzeug (13; 73; 103; 113) vorgenommen wird.

7. Vorrichtung (10; 70; 100; 110) nach Anspruch 1 oder 2,
wobei das erste Fahrzeug (11; 40; 71; 101; 111) ein konventionelles Fahrzeug ist, das durch Ein- oder Anbau des Senders (27; 46; 87) und der Schaltmittel (28; S, S*; 88) zum Fernbedienen des zweiten Fahrzeugs (13; 73; 103; 113) umgerüstet ist.

8. Vorrichtung (110) nach Anspruch 1 oder 2,
wobei es sich bei dem zweiten Fahrzeug (113) um ein emuliertes oder simuliertes Fahrzeug handelt.

9. Vorrichtung (100; 110) nach Anspruch 1, 2 oder 8, die Mittel (104, 105; 115, 116) zum Darstellen von Bildinformation umfasst,
wobei ein Teil dieser Mittel (105; 116) im Sichtbereich einer Person angeordnet sind, die das erste Fahrzeug (101; 111) bedient.

10. Verfahren zum Fernbedienen eines fernbedienbaren Fahrzeugs (13; 73; 103; 113), das über eine Kommunikationsverbindung (12; 47; 72; 102; 112) mit einem ersten Fahrzeug (11; 40; 71; 101; 111) verbindbar ist, wobei das erste Fahrzeug (11; 40; 71; 101; 111) umfasst:
- Bedieneinheiten (21; 41, 51, 61; 81; 114),
- Schaltmittel (28; S, S*; 88), und
- einen Sender (27; 46; 87),
wobei das zweite Fahrzeug (13; 73; 103; 113) umfasst:
- einen Empfänger (31; 91), und
- Steuerelemente (32; 92),
wobei das Verfahren die folgenden Schritte umfasst:
- die Schaltmittel (28; S, S*; 88) in einen Fernbedienungsmodus bringen,
- Betätigen der Bedieneinheiten (21; 41, 51, 61; 81; 114) des ersten Fahrzeugs,
- Übertragen von Fahrzeuginformation (24; 84), welche mit der Betätigung der Bedieneinheiten korreliert sind an den Sender
- Übermittlung an den Empfänger (31; 91),
- Umsetzen in Signale oder Befehle zum Ansteuern der Steuerelemente (32; 92).

11. Verfahren nach Anspruch 10, das die folgenden Schritte umfasst:
- die Schaltmittel (28; S, S*; 88) in einen Fahrmodus bringen,
- fahren des ersten Fahrzeugs durch Betätigung der Bedieneinheiten (21; 41, 51, 61; 81; 114).
